# EUROPÄISCHE PATENTSCHRIFT

(11) **EP 1 386 381 B1**
(45) Veröffentlichungstag und Bekanntmachung des Hinweises auf die Patenterteilung: **11.01.2012**
(21) Anmeldenummer: 03711943.5
(22) Anmeldetag: 08.03.2003
(51) Int. Cl.: H02H 3/00, H02H 3/05

(54) **LEISTUNGSSCHALTER MIT ELEKTRONISCHEM AUSLÖSER UND BYPASS-SCHALTUNG**
CIRCUIT BREAKER COMPRISING AN ELECTRONIC TRIGGER AND A BYPASS SWITCH
DISJONCTEUR A INTERRUPTEUR ELECTRONIQUE ET CIRCUIT DE DERIVATION

(30) Priorität: 13.03.2002 DE 10210920
(43) Veröffentlichungstag der Anmeldung: 04.02.2004
(73) Patentinhaber: Eaton Industries GmbH, 53115 Bonn (DE)
(72) Erfinder: ARENZ, Bernd, 53844 Troisdorf (DE); SCHWARZ, Wolfgang, 50668 Köln (DE)
(86) Internationale Anmeldenummer: PCT/EP2003/002381
(87) Internationale Veröffentlichungsnummer: WO 2003/077396

(56) Entgegenhaltungen:
- DE-A- 19 927 030
- US-A- 5 214 560

## Beschreibung

Die Erfindung betrifft einen Leistungsschalter, insbesondere für Niederspannung, mit einem elektronischem, mikroprozessorgesteuertem Auslöser und einer Bypass-Schaltung.

Aus der DE 44 45 060 C1 ist ein Leistungsschalter mit einer nicht näher ausgeführten Bypass-Schaltung bekannt, durch die zwangläufig eine Auslösung des Leistungsschalters erfolgt, wenn - aus welchen Gründen auch immer - trotz Überschreitung einstellbarer Parameter, insbesondere von Auslösestrom und zugehöriger Verzögerungszeit, durch den elektronischen Auslöser keine Auslösung des Leistungsschalters erfolgt.

Aus der DE 199 27 030 A1 ist ein Leistungsschalter mit einem elektronischen, mikroprozessorgesteuertem Auslöser und einer nicht näher ausgeführten Bypass-Schaltung zur Herbeiführung einer zwangsläufigen Auslösung des Leistungsschalters bei einer ohne Auslösung erfolgenden Überschreitung des eingestellten Auslösestromes sowie einer Watchdog-Schaltung zur Überwachung der Funktion des Mikroprozessors bekannt. Die Bypass-Schaltung ist mit der Watchdog-Schaltung verbunden und weist nicht näher bezeichnete Schaltungsmittel zur Steuerung der strom- und zeitabhängigen Ansprechkennlinie der Bypass-Schaltung in Abhängigkeit vom Ausfall eines von der Watchdog-Schaltung gemeldeten Funktionsbereiches des Mikroprozessors auf.

Aus der US 5,214,560 A ist eine die Funktion einer Bypass-Schaltung ausübende Watchdog-Überwachungsschaltung für den Mikroprozessor des Elektronikauslösers eines Leistungsschalters bekannt. Die Überwachungsschaltung ist mit diskreten Bauelementen aufgebaut und besteht aus der Hintereinanderschaltung eines Hochpasses, eines Transistorschalters, einer Zeitschaltung mit einem Ladekondensator und eines Spannungskomparators. Der ordnungsgemäß arbeitender Mikroprozessor gibt laufend Watchdog-Impulse über den Hochpass an den Transistorschalter, dessen Ausgangsimpulse die Zeitschaltung laufend entladen, sodass in der Zeitschaltung kein Spannungsniveau aufgebaut werden kann, das zu einem Kippen des Komparators führen könnte. Bleiben dagegen infolge eines Ausfalls die Watchdog-Impulse aus, dann erreicht der Ladekondensator alsbald ein Spannungsniveau, das zu einem Kippen des Komparators führt, über dessen Ausgang wiederum eine Auslösespule erregt wird, worauf der Leistungsschalter geöffnet wird. Durch einen am Eingang des Hochpasses angeordneten Transistorschalter können die Watchdog-Impulse kurzgeschlossen werden, womit eine Fehlfunktion des Mikroprozessors zum Testen der Bypass-Schaltung simuliert werden kann.

Nach dem Einschalten derartiger Leistungsschalters erfolgt nur ein allmählicher Aufbau der Versorgungsspannung(en), sodass der Mikroprozessor und die Bypass-Schaltung- erst mit Verzögerung ordnungsgemäß arbeiten können. Dies ist insbesondere dann von Nachteil, wenn der Leistungsschalter auf einen bereits vorhandenem Kurzschluss aufgeschaltet wird, was fatale Folgen für den Leistungsschalter selbst und/oder für die von dem Leistungsschalter zu schützende Anlage haben kann.

Der Erfindung liegt daher die Aufgabe zugrunde, die Schutzfunktion des Leistungsschalters auch beim Aufschalten auf einen Kurzschluss sicherzustellen.

Ausgehend von einem Leistungsschalter der eingangs genannten Art wird die Aufgabe erfindungsgemäß durch die Merkmale des unabhängigen Anspruches gelöst, während den abhängigen Ansprüchen vorteilhafte Weiterbildungen der Erfindung zu entnehmen sind.

Die Erfindung nutzt die Tatsache aus, dass nach dem Einschalten des Leistungsschalters die Versorgungsspannung von Null beginnend stetig bis zu ihrem Endwert aufgebaut wird. Zu Beginn dieser Aufbauphase gibt die Watchdog-Schaltung noch keine Impulse ab, während die Bypass-Schaltung schon erheblich früher funktionsbereit ist. Dadurch werden im Falle einer Aufschaltung des Leistungsschalters auf einen bereits bestehenden Kurzschluss die von den Stromerfassungsmitteln entsprechend der Kurzschlusssituation abgegebenen sehr hohen Messsignale von dem Komparator zu Ladeimpulsen für den Ladekondensator verarbeitet, die innerhalb einer sehr kurzen Zeit zu einer Aktivierung der Auslösespule führen. Dabei sorgt vor dem Überschreiten der Schwellenspannung durch die Versorgungsspannung die von der Überwachungsschaltung an den zweiten Komparatoreingang angelegte höhere, erste Referenzspannung dafür, dass nicht schon bei relativ geringen Überströmen eine Abschalten des Leistungsschalters über die Bypass-Schaltung erfolgt. Im Normalbetrieb übernimmt die Bypass-Schaltung nach dem Überschreiten der Schwellenspannung durch die Versorgungsspannung die Überwachung der Watchdog-Impulse. Währenddem sorgt die an den zweiten Komparatoreingang angelegte niedrigere, zweite Referenzspannung dafür, dass beim Ausbleiben der Watchdog-Impulse schon bei mäßig hohen Überströmen ein Abschalten des Leistungsschalters über die Bypass-Schaltung erfolgt.

Eine zweckmäßige Ausgestaltung der Erfindung besteht darin, dass die erste Referenzspannung dem maximal einstellbaren Auslösestrom, insbesondere dem maximal einstellbaren Kurzschlussstrom entspricht. Damit erfolgt die quasi unverzögerte Abschaltung beim Aufschalten auf einen Kurzschluss niemals unterhalb des tatsächlich eingestellten Auslösestromes. Eine vorteilhafte Weiterbildung besteht darin, dass das Umschalten der Referenzspannungen durch die Überwachungsschaltung nach einer Schwellenzeit erfolgt, die das erfahrungsgemäße Erreichen des Schwellenwertes der Versorgungsspannung nachbildet.

Eine erste Impulsformerstufe erzeugt den Watchdog-Impulsen zuzuordnende Entladeimpulse ausreichender Dauer zum Entladen des Ladekondensators. Eine zweite Impulsformerstufe liefert unabhängig von der Form der Ausgangssignale des Komparators Aktivierungssignale ausreichender Breite; somit reagiert die Bypass-Schaltung auch ordnungsgemäß bei stark verzerrten eingangsseitigen Messsignalen, denn insbesondere bei hohen Kurzschlussströmen liefern übliche Stromerfassungsmittel nur stark verkürzte Messimpulse.

In zweckmäßiger Weise erfolgt die Umschaltung der Referenzspannungen elektronisch, beispielsweise mit Halbleiterschaltern. Eine Unterdrückung der Watchdog-Impulse ist von Vorteil, um zum einen mit höherer Sicherheit ein Entladen des Ladekondensators in der ersten Phase nach dem Einschalten zu unterbinden und um zum anderen zum Testen der Bypass-Schaltung einen Ausfall des Mikroprozessors nachzubilden.

Weitere Einzelheiten und Vorteile der Erfindung ergeben sich aus dem folgenden, anhand von Figuren erläuterten Ausführungsbeispiel. Es zeigen
- Figur 1:: eine Ausführungsform des erfindungsgemäßen Leistungsschalters in schematischer Darstellung;
- Figur 2:: beispielhafte lmputsdiagramme zur Darstellung der Wirkungsweise der Erfindung.

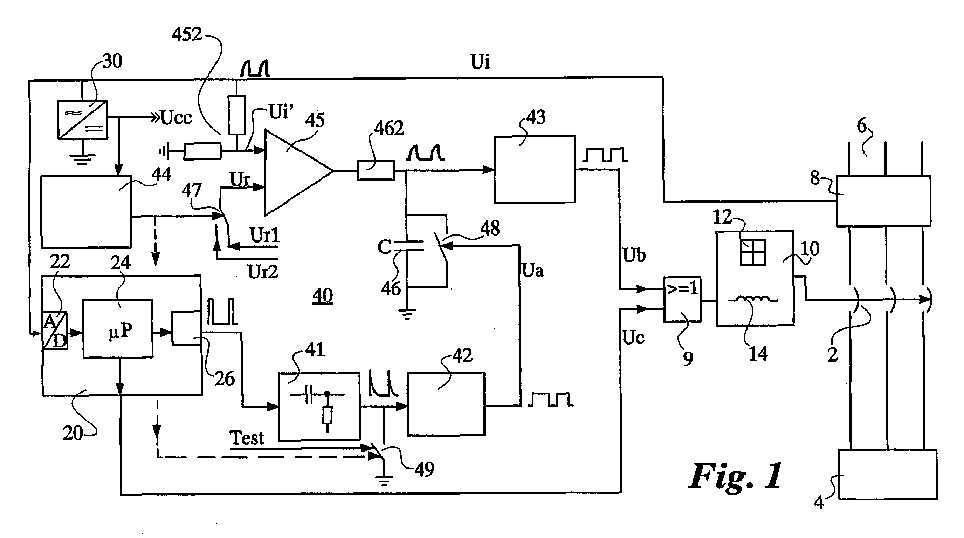

Fig. 1 zeigt einen dreipoligen Leistungsschalter, der über seine Hauptkontakte 2 einen Verbraucher 4 mit einer Niederspannungs-Energiequelle 6 verbindet. Das Öffnen und Schließen der Hauptkontakte 2 erfolgt über Betätigungsmittel 10, die in üblicher Weise einen Betätigungsmechanismus 12 und eine elektromagnetische Auslösespule 14 enthalten. Der über die Hauptkontakte 2 zu dem Verbraucher 4 fließende Hauptstrom wird über Stromerfassungsmittel 8, beispielsweise Stromwandler oder magnetische Stromsensoren, erfasst. Die von den Stromerfassungsmitteln 8 ausgegebenen Messsignale Ui werden einem elektronischen Auslöser 20 zugeführt. Der elektronische Auslöser 20 wandelt die Messsignale Ui mittels eines AD-Wandlers 22 in digitale Signale um, die von einem Mikroprozessor 24 ausgewertet werden. Überschreiten die Messsignale Ui bestimmte einstellbarer Parameter, insbesondere von Auslösestrom und zugehöriger Verzögerungszeit, dann gibt der Auslöser 20 ein erstes Auslösesignal Uc an einen ersten ODER-Eingang einer Aktivierungsschaltung 9 zum Erregen der Auslösespule 14 und damit zum zwangsweisen Öffnen der Hauptkontakte 2 aus. Der Mikroprozessor 24 bzw. der Auslöser 20 umfasst weiterhin eine Watchdog-Schaltung 26, die bei ordnungsgemäßer Arbeitsweise des Mikroprozessors 24 laufend Watchdog-Impulse ausgibt. Die Messsignale Ui werden außerdem einer Versorgungsschaltung 30 zugeführt, die daraus eine Versorgungsspannung Ucc zur Energieversorgung des elektronischen Auslösers 20 und einer Bypass-Schaltung 40 bereitstellt.

Die Bypass-Schaltung 40 sorgt dafür, dass trotz eines Ausfalls des elektronischen Auslösers 20, insbesondere bei Ausfall des Mikroprozessors 24, beim Überschreiten vorgebbarer Grenzströme ein zwangsweises Öffnen der Hauptkontakte 2 erfolgt. In der Bypass-Schaltung 40 sind ausgehend von der Watchdog-Schaltung 26 ein üblicher Hochpass 41 und eine erste Impulsformerstufe 42 hintereinander angeordnet. In der Bypass-Schaltung 40 sind weiterhin eine Überwachungsschaltung 44, ein Spannungskomparator 45, ein Ladekondensator 46 und ein zweite Impulsformerstufe 43 angeordnet. Vom Hochpass 41 werden die eingangsseitig anliegenden Watchdog-Impulse in Nadelimpulse umgewandelt, die allerdings unterbleiben, wenn keine Watchdog-Impulse ausgegeben werden, das heißt, wenn infolge einer Funktionsstörung des Mikroprozessors 24 die Watchdog-Schaltung 26 ausgangsseitig ständig auf dem High-Pegel oder dem Low-Pegel verharrt. Die Nadelimpulse werden von der ersten Impulsformerstufe 42 in Entladeimpulse Ua ausreichender Impulsbreite umgewandelt.

Dem ersten Eingang des Spannungskomparators 45 werden die Messsignale Ui über einen Spannungsteiler 452 als abgeschwächte Messsignale Ui' zugeführt. Die Überwachungsschaltung 44 überwacht die Höhe der von der Versorgungsschaltung abgegebenen Versorgungsspannung Ucc, die nach dem Einschalten des Leistungsschalters von Null auf den Endwert hochläuft. Die Überwachungsschaltung 44 steuert einen elektronischen Umschalter 47. Solange sich die hochlaufende Versorgungsspannung Ucc noch unterhalb eines vorher festgelegten Schwellenpegels befindet, gelangt in diesem Anfangszeitintervall ein erstes Referenzspannung Ur1 über den Umschalter 47 an den zweiten Eingang des Komparators 45. Überschreitet dagegen die hochlaufende Versorgungsspannung Ucc den festgelegten Schwellenpegel, dann gelangt eine zweite Referenzspannung Ur2 über den Umschalter 47 an den zweiten Eingang des Komparators 45. Die erste Referenzspannung Ur1 ist einem durch entsprechende Messsignale Ui repräsentierten, über die Hauptkontakte 2 fließenden momentanen ersten Stromgrenzwert zugeordnet, der dem maximal mit dem elektronischen Auslöser 20 einstellbaren Auslösestrom entspricht, beispielsweise dem Zwölffachen des Nennstromes, für den der Leistungsschalter ausgelegt ist. Die zweite Referenzspannung Ur2 liegt deutlich darunter und ist einem durch entsprechende Messsignale Ui repräsentierten niedrigeren, zweiten Stromgrenzwert zugeordnet, beispielsweise dem Vierfachen des Nennstromes. Während des Anfangszeitintervalls gibt der Komparator 45 demnach nur dann Ausgangssignale ab, wenn die abgeschwächten Messsignale Ui' die erste Referenzspannung Ur1 überschreiten. In der auf das Anfangszeitintervall folgenden Zeit gibt der Komparator 45 schon dann Ausgangssignale ab, wenn die abgeschwächten Messsignale Ui' bereits die niedrigere Referenzspannung Ur2 überschreiten.

Die Ausgangssignale des Komparators 45 werden über einen bedarfsweise vorzusehenden Ladewiderstand 462 von dem einseitig mit dem Bezugspotential verbundenen Ladekondensator 46 aufgenommen. Parallel zum Ladekondensator 46 ist ein erster Halbleiterschalter 48 angeordnet, dessen Steuerelektrode mit dem Ausgang der ersten Impulsformerstufe 42 verbunden ist. Liegen an dieser Steuerelektrode Entladeimpulse Ua an, dann wird der Ladekondensator 46 im Takt dieser Entladeimpulse kurzgeschlossen, und es kann sich unabhängig von dem durch die Stromerfassungsmittel 8 ausgegebenen Messsignale Ui kein erheblicher Spannungspegel über dem Ladekondensator 46 aufbauen. Die Taktfrequenz der Watchdog-Impulse bzw. der Entladeimpulse Ua ist um ein Vielfaches höher als die von der Energiequelle 6 angebotene Netzfrequenz. Unterbleiben die Entladeimpulse Ua infolge eines Versagens des Mikroprozessors 24, dann lädt der Komparator 45 beim Auftreten entsprechender abgeschwächter Messsignale Ui', welche die am zweiten Komparatoreingang anliegende erste oder zweite Referenzspannung Ur1 bzw. Ur2 übersteigt, in kurzer Zeit den Ladekondensator 46. Die sich über dem Ladekondensator 46 aufbauenden, leicht verzögerten Spannungsimpulse werden von einer zweiten Impulsformerstufe 43 in zweite Auslösesignale Ub ausreichender Breite verarbeitet, die über einen zweiten ODER-Eingang der Aktivierungsschaltung 9 zum zwangsweisen Öffnen der Hauptkontakte 2 führen. Unmittelbar nach dem Einschalten des Leistungsschalters können zur Bildung von zweiten Auslösesignalen Ub nur abgeschwächte Messsignale Ui' führen, welche die erste Referenzspannung Ur1 übersteigen. Hat die Versorgungsspannung Ucc dagegen den Schwellenwert überschritten, dann können zur Bildung von zweiten Auslösesignalen Ub bereits Messsignale Ui' führen, welche die niedrigere zweite Referenzspannung Ur2 übersteigen. Bei Vorhandensein der Entladeimpulse Ua kann dagegen die Erregung der Auslösespule 14 nur durch erste Auslösesignale Uc bewirkt werden.

Zwischen dem Hochpass 41 und der ersten Impulsformerstufe 42 ist ein zweiter Halbleiterschalter 49 angeordnet, der durch Aktivieren seiner Steuerelektrode den Hochpass 41 an seinem Ausgang kurzschließt und dadurch die Weiterverarbeitung der Watchdog-Impulse unterdrückt. Das kann zum einen dazu genutzt werden, um bei funktionsfähigem Mikroprozessor 24 die Bypass-Schaltung 40 auf ihre Funktionsfähigkeit zu testen. Zum anderen kann der zweite Halbleiterschalter 49 dazu verwendet werden, dass die Weiterverarbeitung der Watchdog-Impulse und damit die Generierung von Entladeimpulsen Ua in dem Anfangszeitintervall vom Einschalten des Leistungsschalters bis zum Überschreiten der Schwellenspannung durch die Versorgungsspannung Ucc unterbleibt. Die letztgenannte Möglichkeit wird in Fig. 1 durch die mit unterbrochenen Linien dargestellte Verbindung zwischen der Überwachungsschaltung 44 und dem zweiten Halbleiterschalter 49 angedeutet.

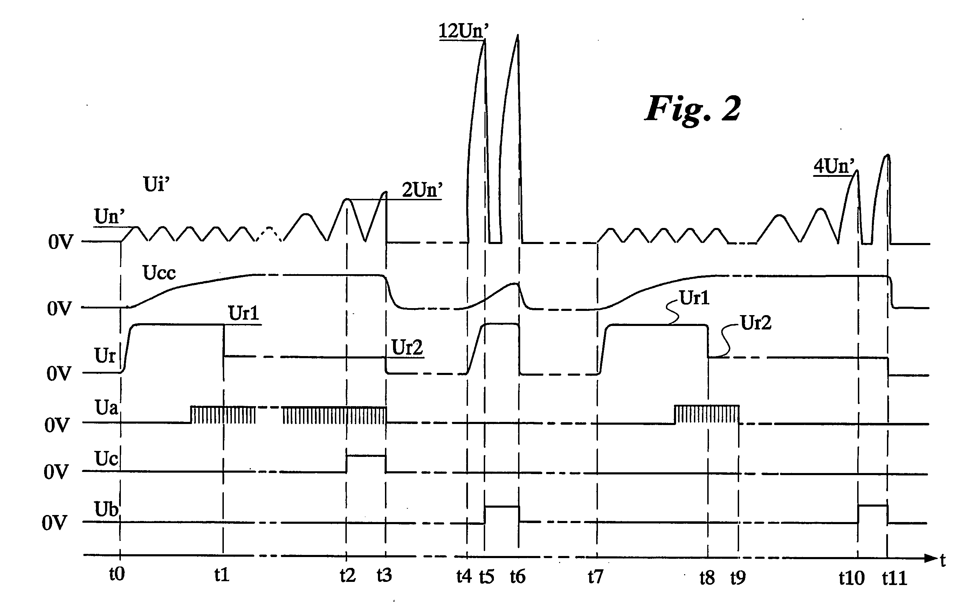

Anhand der Impulsdiagramme in Fig. 2 werden nachfolgend die verschiedenen Auslösemöglichkeiten des Leistungsschalters aus Fig. 1 veranschaulicht. Die einzelnen Impulszüge sind in Fig. 2 mit unterschiedlichen Maßstäben dargestellt. Insbesondere ist der Impulszug der an dem ersten Eingang des Spannungskomparators 45 anliegenden Referenzspannung Ur in kleinerem Maßstab gegenüber dem Impulszug für die abgeschwächten Messsignale Ui' am zweiten Eingang des Komparators 45 dargestellt.

Im Zeitintervall t0 bis t3 wird beispielhaft vom Einschalten des Leistungsschalters auf den Nennstrom und einem wesentlich später auftretenden Überstrom bei funktionierendem elektronischem Auslöser 20 ausgegangen. Zum Zeitpunkt t0 wird der Leistungsschalter auf den Nennstrom aufgeschaltet. Die abgeschwächten Messsignale Ui' haben einen dem Nennstrom entsprechenden Betrag Un'. Mit dem Zeitpunkt t0 beginnt sich die Versorgungsspannung Ucc von Null beginnend aufzubauen. Mit geringer Verzögerung steht als Referenzspannung Ur am zweiten Eingang des Spannungskomparators 45 die höherer, erste Referenzspannung Ur1 an, die von den abgeschwächten Messsignalen Ui' nicht überschritten werden. Zum Zeitpunkt t1 hat die Versorgungsspannung Ucc den vorgegebenen Schwellenwert überschritten, sodass die Referenzspannung Ur auf die niedrigere, zweite Referenzspannung Ur2 übergeht. Ab dem Zeitpunkt t1 ist die volle Funktionsfähigkeit des elektronischen Auslösers 20 gegeben. Mit der Ausgabe von Watchdog-Impulsen kurz vor dem Zeitpunkt t1 stehen Entladeimpulse Ua zur Verfügung. Kurz vor dem Zeitpunkt t2 tritt ein Messsignal Ui auf, das den auf das Zweifache des Nennstroms eingestellten Überstrom entspricht. Zum Zeitpunkt t2 wird daraufhin ein vom elektronischen Auslöser 20 bewirktes erstes Auslösesignal Uc generiert, das zum Zeitpunkt t3 zum zwangsweisen Öffnen der Hauptkontakte 2 führt.

Im Zeitintervall t4 bis t6 wird beispielhaft vom Einschalten des Leistungsschalters auf einen bereits bestehenden Kurzschluss ausgegangen. Zum Zeitpunkt t4 wird der Leistungsschalter eingeschaltet. Die abgeschwächten Messsignale Ui' übersteigen die in dem Anfangszeitintervall maßgebliche erste Referenzspannung Ur1, d.h. das Zwölffache des dem Nennstrom entsprechenden Betrage Un'. Mit geringer Verzögerung wird daraufhin zum Zeitpunkt t5 ein zweites Auslösesignal Ub über die Bypass-Schaltung 40 ausgegeben, dass zum Zeitpunkt t6 zum zwangsweisen Öffnen der Hauptkontakte 2 führt. Hervorzuheben ist, dass in dem Zeitintervall t4 bis t6 der elektronische Auslöser 20 noch funktionsunfähig ist.

Im Zeitintervall t7 bis t11 wird beispielhaft vom Einschalten des Leistungsschalters auf den Nennstrom und einem wesentlich später auftretenden Überstrom bei ausgefallenem elektronischem Auslöser 20 ausgegangen. Zum Zeitpunkt t7 wird der Leistungsschalter auf den Nennstrom aufgeschaltet. Zum Zeitpunkt t8 ändert sich die Referenzspannung Ur von Ur1 auf Ur2. Zum Zeitpunkt t9 wird der Ausfall des Mikroprozessors 24 angenommen, worauf keine Entladeimpulse Ua mehr generiert werden. Es erfolgt allerdings noch keine zwangsweise Auslösung, solange die abgeschwächten Messsignale Ui' unterhalb der zweiten Referenzspannung Ur2 verbleiben. Kurz vor dem Zeitpunkt t10 tritt allerdings ein abgeschwächtes Messsignal Ui' auf, das dem Vierfachen des dem Nennstrom entsprechenden Betrages Un' entspricht. Zum Zeitpunkt t11 wird daraufhin von der Bypass-Schaltung 40 ein zweites Auslösesignal Ub erzeugt.

Die vorliegende Erfindung ist nicht auf die vorstehend beschriebenen Ausführungsform beschränkt, sondern umfaßt auch alle im Sinne der Erfindung gleichwirkenden Ausführungsformen. So läßt sich die Erfindung beispielsweise dahingehend ausgestalten, dass das Umschalten von der ersten Referenzspannung Ur1 auf die zweite Referenzspannung Ur2 durch die Überwachungsschaltung 44 nicht originär beim Überschreiten der Schwellenspannung durch die sich aufbauende Schwellenspannung Ucc sondern vereinfachend beim Erreichen einer festgelegten Schwellenzeit vorgenommen wird. Diese Schwellenzeit wird so festgelegt, dass vom Einschalten des Leistungsschalters bis zu dieser Schwellenzeit die Versorgungsspannung Ucc den Schwellenwert erfahrungsgemäß überschritten hat. Die Schwellenzeit muss natürlich in Abhängigkeit der speziellen Ausgestaltung der maßgeblichen Komponenten, insbesondere der Stromerfassungsmittel 8 und der Versorgungsschaltung 30, festgelegt werden.

## Patentansprüche

1. Leistungsschalter mit elektronischem Auslöser und Bypass-Schaltung, wobei
- Stromerfassungsmittel (8) sowohl Messsignale (Ui) des zu überwachenden Stromes durch die Hauptkontakte (2) des Leistungsschalters als auch die Versorgungsenergie für den elektronischen Auslöser (20) und die Bypass-Schaltung (40) liefern,
- der mikroprozessorgesteuerte Auslöser (20) die Messsignale (Ui) verarbeitet und bei Überschreiten einstellbarer Grenzwerte eine Auslösespule (14) zum zwangsweisen Öffnen der Hauptkontakte (2) aktiviert und
- die Bypass-Schaltung (40) einen einer zur Überwachung des Mikroprozessors (24) dienenden Watchdog-Schaltung (26) nachfolgenden Hochpass (41), eine diesem nachgeordneten ersten Halbleiterschalter (48), einen über diesen entladbaren Ladekondensator (46) und einen Spannungskomparator (45) enthält,
**dadurch gekennzeichnet, dass**
- der Komparator (45) über seinen ersten Eingang mit den Stromerfassungsmitteln (8) und ausgangsseitig mit dem Ladekondensator (46) wirkverbunden ist,
- eine Überwachungsschaltung (44) bei Unterschreitung bzw. beim Überschreiten eines vorgegebenen Schwellenpegels der Versorgungsspannung (Ucc) eine erste bzw. zweite Referenzspannung (Ur1; Ur2) an den zweiten Eingang des Komparators (45) anlegt, wobei die erste Referenzspannung (Ur1) einem ersten Stromgrenzwert und die zweite Referenzspannung (Ur2) einem gegenüber dem ersten Stromgrenzwert kleineren, zweiten Stromgrenzwert zugeordnet ist, und
- eine ausgangsseitig zu der Auslösespule (14) geführte Aktivierungsschaltung (9) über einen ersten ODER-Eingang von dem elektronischen Auslöser (20) und über einen zweiten ODER-Eingang von dem Ladekondensator (46) in Abhängigkeit von dessen Ladezustand aktivierbar ist.

2. Leistungsschalter nach vorstehendem Anspruch, **dadurch gekennzeichnet, dass** die erste Referenzspannung (Ur1) dem maximal einstellbaren Grenzwert für den Auslösestrom entspricht.

3. Leistungsschalter nach einem der vorstehenden Ansprüche, **dadurch gekennzeichnet, dass** über die Überwachungsschaltung (44) vor bzw. nach Ablauf einer vom Einschalten des Leistungsschalters an gerechneten Schwellenzeit, in der der Schwellenpegel der Versorgungsspannung (Ucc) überschritten wird, die erste bzw. zweite Referenzspannung (Ur1; Ur2) am zweiten Eingang des Komparators (45) anliegt.

4. Leistungsschalter nach einem der vorstehenden Ansprüche, **dadurch gekennzeichnet, dass** zwischen dem Hochpass (41) und dem ersten Halbleiterschalter (48) eine erste Impulsformerstufe (42) angeordnet ist.

5. Leistungsschalter nach einem der vorstehenden Ansprüche, **dadurch gekennzeichnet, dass** zwischen dem Ladekondensator (46) und der Aktivierungsschaltung (9) eine zweite Impulsformerstufe (43) angeordnet ist.

6. Leistungsschalter nach einem der vorstehenden Ansprüche, **dadurch gekennzeichnet, dass** die erste und die zweite Referenzspannung (Ur1; Ur2) über einen von der Überwachungsschaltung (44) umschaltbaren elektronischen Umschalter (47) zu dem Komparator (45) geführt ist.

7. Leistungsschalter nach einem der vorstehenden Ansprüche, **gekennzeichnet durch** von der Überwachungsschaltung (44) steuerbare Mittel (49) zum Unterdrücken der Watchdog-Impulse während der Unterschreitung des Schwellenwertes der Versorgungsspannung (Ucc).

8. Leistungsschalter nach einem der vorstehenden Ansprüche, **gekennzeichnet durch** Mittel (49) zum Unterdrücken der Watchdog-Impulse zu Testzwecken.

9. Leistungsschalter nach einem der beiden vorstehenden Ansprüche, **dadurch gekennzeichnet, dass** ein zweiter Halbleiterschalter (49) ausgangsseitig zu dem Hochpass (41) geführt ist.

## Claims

1. Circuit breaker comprising an electronic tripping device and a bypass circuit,
- current detection means (8) providing test signals (Ui) of the current to be monitored by means of the main contact (2) of the circuit breaker and the supply energy for the electronic tripping device (20) and the bypass circuit (40),
- the microprocessor-controlled tripping device (20) processing the test signals (Ui) and actuating a trip coil (14) so as to open the main contact (2) automatically when adjustable limit values are exceeded, and
- the bypass circuit (40) including a high pass filter (41) connected downstream from a watchdog circuit (26) used for monitoring the microprocessor (24), a first semiconductor switch (48) arranged downstream from said high pass filter, a charging capacitor (46) which is dischargeable via said first semiconductor switch, and a voltage comparator (45),
**characterised in that**
- the comparator (45) is operatively connected via its first input to the current detection means (8) and on the output side to the charging capacitor (46),
- a monitoring circuit (44) applies a first and second reference voltage (Ur1; Ur2) respectively to the second input of the comparator (45) when the supply voltage (Ucc) is respectively below and above a pre-defined threshold level, the first reference voltage (Ur1) being associated with a first current limit value and the second reference voltage (Ur2) being associated with a second current limit value which is smaller than the first current limit value, and
- an actuation circuit (9) guided on the output side to the trip coil (14) can be actuated via a first OR-input by the electronic tripping device (20) and via a second OR-input by the charging capacitor (46) as a function of the state of charge thereon

2. Circuit breaker according to the preceding claim, **characterised in that** the first reference voltage (Ur1) corresponds to the maximum limit value which can be set for the tripping current.

3. Circuit breaker according to either of the preceding claims, **characterised in that**, respectively before and after the lapsing of a threshold time calculated from when the circuit breaker is switched on and during which the supply voltage (Ucc) is exceeded, the first and second reference voltage (Ur1; Ur2) respectively is applied to the second input of the comparator (45) via the monitoring circuit (44).

4. Circuit breaker according to any one of the preceding claims, **characterised in that** a first pulse shaper stage (42) is arranged between the high pass filter (41) and the first semiconductor switch (48).

5. Circuit breaker according to any one of the preceding claims, **characterised in that** a second pulse shaper stage (43) is arranged between the charging capacitor (46) and the actuation circuit (9).

6. Circuit breaker according to any one of the preceding claims, **characterised in that** the first and the second reference voltage (Ur1; Ur2) are guided to the comparator (45) via an electronic change-over switch (47) which can be switched over by the monitoring circuit (44).

7. Circuit breaker according to any one of the preceding claims, **characterised by** means (49), which can be controlled by the monitoring circuit (44), for suppressing the watchdog pulses while the supply voltage (Ucc) is below the threshold value.

8. Circuit breaker according to any one of the preceding claims, **characterised by** means (49) for suppressing the watchdog pulses for test purposes.

9. Circuit breaker according to one of the two preceding claims, **characterised in that** a second semiconductor switch (49) is guided on the output side to the high pass filter (41).

## Revendications

1. Disjoncteur comprenant un déclencheur électronique et un circuit de dérivation, dans lequel
- des moyens de détection du courant électrique (8) fournissent des signaux de mesure (Ui) du courant devant être surveillé par les contacts principaux (2) du disjoncteur, ainsi que l'énergie d'alimentation pour le déclencheur électronique (20) et le circuit de dérivation (40) ;
- le déclencheur commandé par microprocesseur (20) traite les signaux de mesure (Ui) et active, lors du dépassement de valeurs limites réglables, une bobine de déclenchement (14) en vue d'une ouverture forcée des contacts principaux (2) ; et
le circuit de dérivation (40) contient un filtre passe-haut (41) placé en aval d'un circuit à chien de garde (26) servant à la surveillance du microprocesseur (24), un premier interrupteur à semi-conducteur (48) agencé en aval de celui-ci, un condensateur de charge (46) pouvant être déchargé par celui-ci, et un comparateur de tension (45), **caractérisé en ce que**
- le comparateur (45) est connecté en service par l'intermédiaire de sa première entrée aux moyens de détection du courant électrique (8) et du côté de la sortie au condensateur de charge (46) ;
- un circuit de surveillance (44) applique, lorsque la tension d'alimentation (Ucc) est inférieure ou supérieure à un niveau de seuil prédéterminé, une première ou une deuxième tension de référence (Ur1 ; Ur2) à la deuxième entrée du comparateur (45), la première tension de référence (Ur1) étant affectée à une première valeur limite du courant électrique et la deuxième tension de référence (Ur2) étant affectée à une deuxième valeur limite du courant électrique, inférieure à la première valeur limite du courant électrique ; et
- un circuit d'activation (9), guidé du côté de la sortie vers la bobine de déclenchement (14), peut être activé par l'intermédiaire d'une première entrée OU par le déclencheur électronique (20) et par l'intermédiaire d'une deuxième entrée OU par le condensateur de charge (46), en fonction de l'état de charge de celui-ci.

2. Disjoncteur selon la revendication précédente, **caractérisé en ce que** la première tension de référence (Ur1) correspond à la valeur limite maximale réglable pour le courant de déclenchement.

3. Disjoncteur selon l'une des revendications précédentes, **caractérisé en ce que** le circuit de surveillance (44) applique, avant ou après l'écoulement d'une période de seuil, calculée à partir de l'enclenchement du disjoncteur, pendant laquelle le niveau de seuil de la tension d'alimentation (Ucc) est dépassé, la première ou la deuxième tension de référence (Ur1 ; Ur2) à la deuxième entrée du comparateur (45).

4. Disjoncteur selon l'une des revendications précédentes, **caractérisé en ce qu'**un premier étage de formation d'impulsions (42) est agencé entre le filtre passe-haut (41) et le premier interrupteur à semi-conducteur (48).

5. Disjoncteur selon l'une des revendications précédentes, **caractérisé en ce qu'**un deuxième étage de formation d'impulsions (43) est agencé entre le condensateur de charge (46) et le circuit d'activation (9).

6. Disjoncteur selon l'une des revendications précédentes, **caractérisé en ce que** les première et deuxième tensions de référence (Ur1; Ur2) sont guidées par un commutateur électronique (47), pouvant être commuté par le circuit de surveillance (44), vers le comparateur (45).

7. Disjoncteur selon l'une des revendications précédentes, **caractérisé par** des moyens (49) à commande par le circuit de surveillance (44), servant à supprimer les impulsions de chien de garde lorsque la tension d'alimentation (Ucc) est inférieure à la valeur de seuil.

8. Disjoncteur selon l'une des revendications précédentes, **caractérisé par** des moyens (49) servant à supprimer les impulsions de chien de garde pour des objectifs de test.

9. Disjoncteur selon l'une des deux revendications précédentes, **caractérisé en ce qu'**un deuxième interrupteur à semi-conducteur (49) est guidé sur le côté de sortie vers le filtre passe-haut (41).
